Europäisches Patentamt

(19) European Patent Office

Office européen des brevets

(11) Publication number: **0 084 204**

A1

(12) **EUROPEAN PATENT APPLICATION**

(21) Application number: **82300233.2**

(22) Date of filing: **18.01.82**

(51) Int. Cl.³: **A 47 J 25/00**
**A 23 N 4/20, B 26 D 1/04**

(43) Date of publication of application:
27.07.83 Bulletin 83/30

(84) Designated Contracting States:
BE CH DE FR GB IT LI LU NL

(71) Applicant: Castle & Cooke, Inc.
P.O. Box 3928 50 California Street
San Francisco California 94119(US)

(72) Inventor: Peterson, Douglas O.
Ishibashi Homes 302 12-7, Roppongi 5-chome
Minato-ku Tokyo(JP)

(72) Inventor: Fujiki, Shigeo
35-15-101 Kyodoh, 5-chome
Setagaya-ku Tokyo(JP)

(74) Representative: Baldock, Hugh Charles et al,
Lloyd Wise, Tregear & Co. Norman House 105-109
Strand
London, WC2R 0AE(GB)

(54) **Apparatus for peeling pineapples.**

(57) An apparatus for peeling pineapples comprises a cutter 15 having a cylindrical blade 14 for peeling pineapples, a cutter driving means (64-66, 70, 72) and a co-operating guide 18 for guiding the cylindrical blade along the axis of the pineapple to be cut. The cutter includes a pineapple core extracting blade 12 which is coaxial with and provided within said cylindrical blade and at least one pineapple peel severing blade 36 which outwardly extends from the outer surface of the pineapple peeling blade. The guide is provided so that it vertically extends from a base member 16. The cutter includes a holder 24 which is adapted to hold the upper ends of said pineapple peeling blade and a pineapple core taking out blade, the holder being adapted to be slidable along said guide means. The driving means comprises a driving lever, pivotally connected to the holder, and an intermediate lever 64 one end of which is pivotally mounted on a fixed pivot and the other end of which is pivotally connected to the end of the driving lever. Pressure on the end of the driving lever lowers the holder 24, thus forcing the blades 12 and 14 through a pineapple placed on the base member 16. A spring 58 applies an upwardly directed bias to the holder 28 and a pineapple pusher 40, 48-52, 54 allows the pineapple to be expelled from within the cylindrical blade 14 after the peeling operation.

FIG 1

2.

0084204

This invention relates to an apparatus for peeling pineapples.

In the past, most pineapples were processed and canned in factories and then sold; however, recently, raw pineapples with peel have come to be sold without such processing. However, the peel of pineapple is hard compared with that of other fruits and is difficult for purchasers to peel in their homes, so it is desirable that the pineapples be peeled in the fruit shops and then sold. A pineapple peeler has been known which has a mechanism in which a cutter and a pineapple are rotated relative to each other by a motor to peel the pineapple. However, this is large and expensive, so that it is difficult for the usual fruit shop to purchase and use such apparatus. Accordingly, most raw pineapples are sold with peel and, thus, the demand for raw pineapples does not rise as desired.

Accordingly, the present invention is directed to provide a compact size and inexpensive apparatus for peeling pineapples.

An apparatus for peeling pineapples according to the invention includes a cutter having a cylindrical blade for peeling pineapples and a co-operating guide for guiding the cutter along its axis and towards the pineapple to be cut. In the preferred arrangement a driver for driving the cutter along the guide is provided and the cutter includes a pineapple core extracting blade, which is coaxial with and provided within said cylindrical blade, and at least one pineapple peel severing blade which outwardly extends from the outer surface of the pineapple peeling blade. In this arrangement the guide is disposed so that it vertically extends from a base member. The cutter includes a holder which is adapted to hold the upper ends of said pineapple peeling blade and a pineapple core taking out blade, the holder being adapted to be slidable along said guide means.

Hereinafter the invention is described by way of example.

Figure 1 is a partially cut away side elevation view apparatus of the present invention; and

Figure 2 is a perspective view of the apparatus in which the cutter means is depressed.

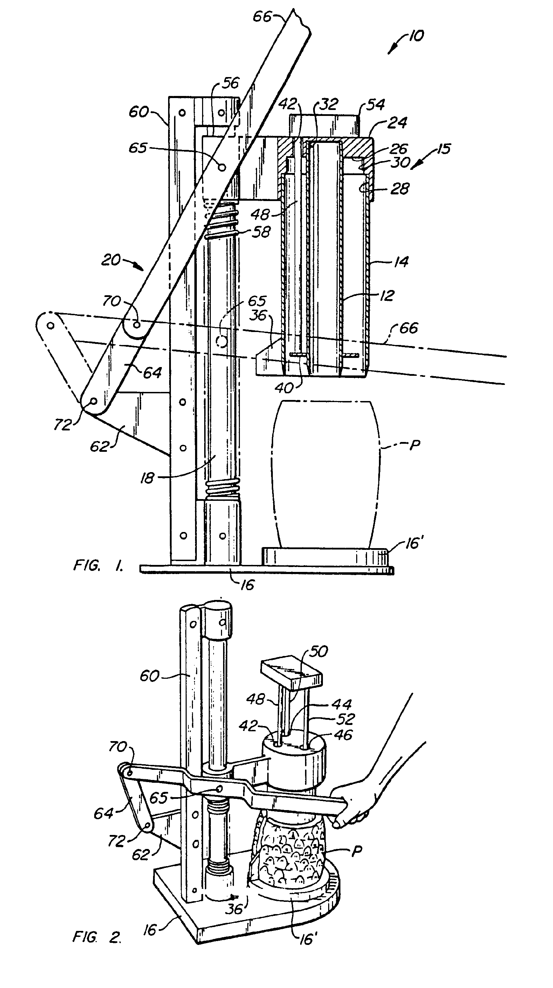

In Figure 1, there is shown a pineapple peeling apparatus 10 in accordance with this invention. As shown, the apparatus includes cutter means 15 having an inner blade 12 and outer blade 14 which are coaxially arranged, a base member 16, a shaft 18 acting as the guide means which vertically extends from the base member 16 and is adapted to guide said cutter means up and down, and driving means 20 for driving the cutter means downwardly along the guide means so that the pineapple P positioned on the base member is peeled.

Cutter means 15 has a holder 24 which holds the upper ends of the blades 12 and 14. The holder is provided with a recess 26 which opens downwardly and has wall surfaces 28, 30 and 32 which are arranged coaxially and the diameters of which are steppedly reduced. The inner blade 12 and the outer blade 14 are inserted into the recess so that the smallest diameter wall surface 32 fixedly bears the former blade and the largest wall surface 28 fixedly bears the latter blade. The inner blade is used as a blade for cutting out the pineapple core and the outer blade is

4.

used as a blade for peeling the pineapple. When the pineapple to be peeled is smaller than usual, the outer blade 14 is removed and a smaller blade is then fixedly supported by the intermediate wall surface 30 so that the smaller blade is used as a pineapple peeler blade. The outer blade is provided with a peel severing blade 36 which extends in a plane including the central axis of the outer blade. This blade 36 severs the pineapple peel in a vertical direction when the cutter means 15 is pushed into the pineapple downwardly so that the friction between the outer blade and the pineapple peel is reduced to thereby make it easy to push the cutter means downwardly. An annular pineapple pusher 40 is provided between and near the lower ends of the inner and outer blades 12 and 14 and the pusher 40 is provided with rods 48, 50 and 52 which extend upwardly through the holes 42, 44 and 46 provided in the holder 24. At the upper ends of the rods, a depression member 54 is connected and the pusher 40 is held in the position shown in Figure 1 by engagement of the member 54 with top portion 24' of the holder 24. The holder 24 is provided with sliding member 56 which laterally extends and is slidably mounted on the guide means 18. A coil spring 58 is provided around the guide means 18 and under the sliding member 56 so that the spring holds the sliding member and, thus, the cutter means 15 at the upper position as shown.

The driving means 20 includes a supporting member 60 mounted on the base member 16 adjacent the guide means 18, an intermediate lever 64 which is pivotably connected to the projecting portion 62 laterally extending from the supporting member, and a driving

5.

lever 66 which is pivotably connected to the intermediate lever at the lower end and extends upwardly and the intermediate portion of which is pivotably connected to the sliding member 56 of the holder 24 by means of the pin 65. The intermediate lever 64 and the driving lever 66 are, as shown, aligned linearly when the apparatus is not being used.

In operation, first a pineapple P the opposite ends of which are previously cut off is mounted on the pineapple mounting portion 16' of the base member 16 which is under the cutter means 15. Then, the operator grips the upper end of the driving lever 66 and depresses it. The driving lever is rotated around the pivot 70 between the driving lever and the intermediate lever 64 so that the driving lever pushes the sliding member 56 and, thus, the cutter means 15 downwardly through the pin 65. In response to the downward movement of the sliding member, the intermediate lever 64 is rotated around the pivot 72 between the projecting portion 62 of the supporting means 60 and the intermediate lever to permit the movement of the driving lever 66 as described above. In accordance with the downward movement of the cutter means, the inner blade 12 is pushed around the pineapple core and the outer blade 14 is pushed inside of the pineapple peel; accordingly, the peel severing blade 36 severs the pineapple peel vertically. While the cutter is moved downwardly till it comes to contact the base member, the pineapple pusher 40 engages the upper end of the pineapple so that the member 54 is held in a raised position.

Incidentally, in Fig. 1 the condition of the apparatus with the lever 66 being depressed is depicted by the phantom line.

Then, while the operator holds the member 54 down, the force used to depress the driving lever is reduced so that the cutter holder 24 is moved upwardly by the spring 54 and is returned to the plate-like members, which are pivotably connected to the opposite sides of the intermediate lever 64 and pass both sides of the cutter means, and connecting means connected between the upper portions of the pair of the above plate-like members so that the depression force can be uniformly transmitted to the cutter means from the driving lever 66. Use of the peel severing blade 36 considerably reduces the friction between the peel and the outer blade and, thus, the force required for depressing the cutter means, but the peeling operation can be effected even if the peel severing blade is not provided. In such case, the peel is not vertically severed and remains around the peeled pineapple to be sold assuming the appearance of a natural pineapple, whereby the desired purchase is raised.

## CLAIMS

1. An apparatus for peeling pineapples including a pineapple cutter <u>characterised in that</u> the cutter comprises a cylindrical blade 14 and said apparatus further comprises guide means 18 for guiding the cylindrical blade axially in a prescribed direction and driving means 24, 65, 66 coupled to said cylindrical blade for driving said blade through a pineapple placed along the axis of the blade.

2. An apparatus according to Claim 1 <u>characterised in that</u> the cutter includes a pineapple core extracting blade 12 arranged coaxially within said cylindrical blade 14, both said blades being attached to a common member 24.

3. An apparatus according to Claim 1 or Claim 2 <u>characterised in that</u> to said cylindrical blade 14 is attached a pineapple peel severing blade 36, the latter extending radially outwards from said cylindrical blade.

4. Apparatus according to Claim 2 or Claim 3 when appendant to Claim 2 <u>characterised in that</u> said guide means comprises a shaft 18 which extends vertically from a base member 16, and said cutter includes a holder 24 which is arranged to be slidably mounted on said shaft and to which said cylindrical blade and said core extracting blade are attached, there being a spring 58 provided between the base member and said holder which biases the holder in a vertically upward direction.

5. Apparatus according to Claim 4 <u>characterised in that</u> said driving means comprises driving lever 66 and an intermediate lever 64, said intermediate lever being pivotally supported at one end by means of a first pivot 72 which is fixed relative to the base member 16 and being connected to the driving lever 66 through a second pivot 70 at its other end, and said driving lever being connected to said holder 24 through a third pivot 65 situated at an intermediate position along the driving lever.

6.   Apparatus according to Claim 5 <u>characterised in that</u> said guide means includes a support member 60 for supporting said shaft 18 in the vertical position, and said intermediate lever is pivotally connected to an extension 62 of said support member.

7.   Apparatus according to any of Claims 4 to 6 <u>characterised in that</u> said holder 24 incorporates an axially slidable pineapple abutment member 40 arranged coaxially within said cylindrical blade 14 and mounted on rods (48 to 52) which pass slidably through the holder 24, said rods being mounted on a common thrust member 54 disposed above the holder.

FIG. I.

FIG. 2.

# EUROPEAN SEARCH REPORT

Application number

EP 82 30 0233

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A- 764 717 (ROY HOLMES) <br> * The whole document * | 1-7 | A 47 J 25/00 <br> A 23 N 4/20 <br> B 26 D 1/04 |
| A | FR-A-2 358 839 (Y. THOINET) <br> * The whole document * | 1 | |
| A | CH-A- 260 257 (O. LUCHER) | | |
| A | US-A-3 473 588 (M.W. LOVELAND) | | |

TECHNICAL FIELDS SEARCHED (Int. Cl. 3)

A 47 J
A 23 N
B 26 D

The present search report has been drawn up for all claims

| Place of search | Date of completion of the search | Examiner |
|---|---|---|
| THE HAGUE | 05-08-1982 | NEHRDICH H.J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82